# EUROPÄISCHE PATENTANMELDUNG

(11) **EP 1 266 795 A2**
(43) Veröffentlichungstag der Anmeldung: **18.12.2002**
(21) Anmeldenummer: 02013073.8
(22) Anmeldetag: 13.06.2002
(51) Int. Cl.: B60P 3/36, A47J 47/16

(54) **Vorrichtung zur Aufbewahrung bzw. Vorhaltung von Tellern oder Tassen in einem Campingfahrzeug, Caravan oder einem Boot**

(30) Priorität: 16.06.2001 DE 20109993 U; 16.06.2001 DE 20109994 U
(71) Anmelder: Froli Kunststoffwerk Heinrich Fromme OHG, 33758 Schloss Holte-Stukenbrock (DE)
(72) Erfinder: Fromme, Heinrich, 33758 Schloss Holte-Stukenbrock (DE)
(74) Vertreter: Strauss, Hans-Jochen, Dr. Dipl.-Phys.

(57) **Zusammenfassung**

Die Vorrichtung besteht aus einer Halterung für die Teller oder Tassen. Dabei besteht die Halterung (12,22) aus einem einstückig gespritzten Kunststoffgestell (13,23) mit geformten Einsätzen (14,24) für die Teller oder Tassen, wobei an einer der nach außen weisenden Seitenwand (110,210) des Gestells (13,23) jeweils ein Hakenelement bzw. eine Ausnehmung (111,211) angeformt bzw. eingeformt ist, um die einzelnen Gestelle (13) und (23) miteinander zu verbinden.

## Beschreibung

Die Erfindung betrifft eine Vorrichtung zur Aufbewahrung bzw. Vorhaltung von Geschirr wie Teller oder Tassen in einem Campingfahrzeug, einem Caravan oder einem Boot, bestehend aus einer Halterung für die Teller bzw. Tassen.

Bei Campingfahrzeugen, einem Caravan oder Boot gilt es Besteck oder Geschirr vor unwillkürlichen äußeren Einflüssen zu Geräuschentwicklungen beim Fahren zu schützen, damit das Geschirr oder das Besteck möglichst geräuschfrei in den Schränken aufbewahrt wird. Hierzu werden beispielsweise die einzelnen Gegenstände in Halterungen in den Schränken vorgehalten. Nachteilig bei derartig nach dem Stand der Technik bekannten Halterungen ist es, dass diese Halterungen in dem Möbelstück selbst eingebaut sind, wobei eine Flexibilität zur Aufnahme der entsprechenden Gegenstände oft nicht gegeben ist.

Es ist daher die Aufgabe der Erfindung vor dem aufgezeigten Stand der Technik hier eine Vorrichtung zur Vorhaltung bzw. Aufbewahrung von Tellern oder Tassen derart weiter zu bilden, die flexibel zu handhaben ist, wobei die Halterung eine geräuschlose Vorhaltung der Teller oder Tassen gewährleisten soll.

Diese Aufgabe wird erfindungsgemäß dadurch gelöst, dass die Halterung aus einem einstückig gespritzten Kunststoffgestell mit eingeformten Einsätzen für die Teller oder Tassen besteht, wobei an einer der nach außen weisenden Wand des Gestells jeweils ein Hakenelement bzw. eine Ausnehmung angeformt bzw. eingeformt ist, um die einzelnen Gestelle miteinander zu verbinden. Diese Ausbildung hält für den einzelnen Teller bzw. Tasse einen separaten Einsatz vor, wobei das gespritzte Kunststoffgestell in den Schränken derart platziert werden kann, dass es rutsch- und ruckelfrei gelagert werden kann. Der Teller bzw. die Tasse selbst ist dabei in einem Einzeleinsatz eingefasst, so dass ein ruckelfreies Lagern bzw. Vorhalten des Tellers bzw. der Tasse gegeben ist. Dabei können die einzelnen Kunststoffgestelle miteinander verbunden werden, wobei an einer der nach außen weisenden Seitenwand des Gestells jeweils ein Hakenelement bzw. eine Ausnehmung angeformt bzw. eingeformt ist, um die einzelnen Gestelle aneinander festzulegen. Aufgrund dieser Ausbildung können somit mehrere Kunststoffgestelle aneinander gereiht werden, so dass für entsprechend viele Teller bzw. Tassen auch entsprechende Halterungen bereit gestellt werden können.

Nach einer besonders vorteilhaften Weiterbildung der Erfindung nehmen die Wände des Einzeleinsatzes für die Teller viertelkreisförmige Bogensegmente ein, zwischen denen ein unter einer Schräge verlaufender ebenfalls viertelkreisförmiger Bogen eingeformt ist. Der Teller ist somit formschlüssig in dem Einsatz eingebunden, so dass er quasi selbstklemmend in Folge seines Eigengewichtes in dem Einsatz liegt.

Nach einer besonders vorteilhaften Weiterbildung der Erfindung ist zur Verringerung des Aufnahmeraums des Einzeleinsatzes für den Teller ein zusätzlicher Bodeneinsatz in dem Einzeleinsatz einsetzbar. Diese Ausbildung gewährleistet, dass beispielsweise auch Untertassen in dem Kunststoffgestell ruckel- und rutschfrei vorgehalten werden können. Somit ist es möglich, Teller unterschiedlicher Durchmesser in dem Kunststoffgestell und damit in dem einzelnen Einsatz vorzuhalten.

Hierzu weist der zusätzliche Bodeneinsatz ebenfalls einen unter einer Schräge verlaufenden viertelkreisförmig gebogenen Boden mit geringerem Durchmesser auf. Der unter einer Schräge verlaufende Tellerrand liegt somit im eingesetzten Zustand an der Schräge des verlaufenden viertelkreisförmig gebogenen Bodens an. Um eine sichere Halterung bzw. auch Handhabung des zusätzlichen Bodeneinsatzes zu gewährleisten bzw. bereit zu stellen, geht die obere Bodenwand des zusätzlichen Bodeneinsatzes jeweils endseitig in eine Kragenwulst über, die im eingesetzten Zustand auf der Wand des Einsatzes aufliegt. Soll beispielsweise nun der Einsatz wieder für einen größeren Teller vorgehalten werden, so kann auf Grund der Kragenwulst der zusätzliche Bodeneinsatz leicht wieder aus dem Bodeneinsatz herausgenommen bzw. eingesteckt werden. Damit auch insbesondere der zusätzliche Bodeneinsatz ruckel- bzw. rutschfrei in dem Einsatz eingefasst werden kann, wird vorgeschlagen, dass an der Rückseite des zusätzlichen Bodeneinsatzes Stifte angeformt sind, die in Öffnungen des Bodens des Einsatzes greifen. In Folge dieser Steckverbindung ist eine sichere Vorhalterung des zusätzlichen Bodeneinsatzes in dem Einsatz gegeben.

Nach einer besonders vorteilhaften Weiterbildung der Erfindung wird auch vorgeschlagen, dass insbesondere an einer der wand des Einzeleinsatzes Stützelemente für unterschiedliche Tellergrößen angeformt sind. Diese Stützelemente sind derart aus der Wand herausgeformt, so dass sie ebenfalls die ruckelfreie bzw. rutschfreie Vorhaltung von Tellern unterschiedlicher Durchmesser in dem Einsatz ermöglichen.

Bei dem Einsatz für die Tassen weist dieser einen Boden auf, an dem die die Tasse eingefassten einfassenden Wände angeformt sind. Somit wird erreicht, dass die Einzeltasse allseitig umgeben ist, wobei die einfassenden wände im wesentlichen eine Rechteckstruktur aufweisen bzw. einnehmen.

Nach einer besonders vorteilhaften Weiterbildung der Erfindung ist in einer der Wände mindestens eine Federzunge eingeformt oder eingelassen, die eine Verspannung der Tasse in dem Einsatz bewirkt. Auf Grund dieser Federzunge wird erreicht, dass selbst die Tasse in dem einzelnen Einsatz unter Verspannung vorgehalten wird, also ein Ruckeln der Tasse in dem Einsatz gänzlich unterbunden wird. Die Tasse wird somit völlig geräuschfrei in der Halterung bzw. in dem Gestell vorgehalten.

In zweckmäßiger Weise sind die Wände doppelwandig ausgebildet, wobei in der nach innen weisenden Wand die Federzunge aus dem Material der Wand ausgespart ist. Auf Grund dieser Ausbildung ist es möglich, beispielsweise das Gestell mit der Federzunge als einstückig gespritztes Kunststoffgestell herzustellen. Damit das Gestell platzsparend ausgebildet werden kann, ist im Wandbereich eine Ausnehmung zur Aufnahme des Tassengriffs vorgesehen. Somit kann eine derart sperrig ausgebildete Tasse in den Einsatz eingefügt werden, wobei der Tassengriff durch die Wandung des Einsatzes ragt. In Weiterbildung der Erfindung sind dabei zwei Ausnehmungen diametral auf einer Diagonalen des Einsatzes angeordnet. Diese Anordnung ermöglicht insbesondere mehrere Kunststoffgestelle ineinander anzuordnen.

Ein Ausführungsbeispiel der Erfindung wird an Hand der nachstehenden Figuren 1 bis 10 näher erläutert; dabei zeigen:
- Figur 01:: Eine perspektivische Darstellung des Kunststoffgestells für Teller mit den zusätzlichen Bodeneinsätzen;
- Figur 02:: Eine teilweise geschnittene perspektivische Darstellung eines Kunststoffgestells für Teller ohne Bodeneinsätze;
- Figur 03:: Eine weitere teilweise geschnittene perspektivische Darstellung gem. der Figur 02 mit den zusätzlichen Bodeneinsätzen;
- Figur 04:: Eine perspektivische Rückansicht eines Bodeneinsatzes.
- Figur 05:: Eine perspektivische Darstellung einer weiteren Ausführung des Kunststoffgestells für Teller mit zusätzlichen Stützelementen;
- Figur 06:: Eine weitere Darstellung in geschnittener Ansicht gemäß der Figur 5;
- Figur 07:: Eine perspektivische Darstellung von drei miteinander verbundenen Kunststoffgestellen für Tassen;
- Figur 08:: Eine weitere perspektivische Darstellung eines Kunststoffgestells für Tassen mit zwei Einsätzen;
- Figur 09:: Eine weitere perspektivische Darstellung eines Kunststoffgestells für Tassen von der Gegenseite;
- Figur 10:: Eine teilweise geschnittene Darstellung eines Kunststoffgestells ebenfalls für Tassen.

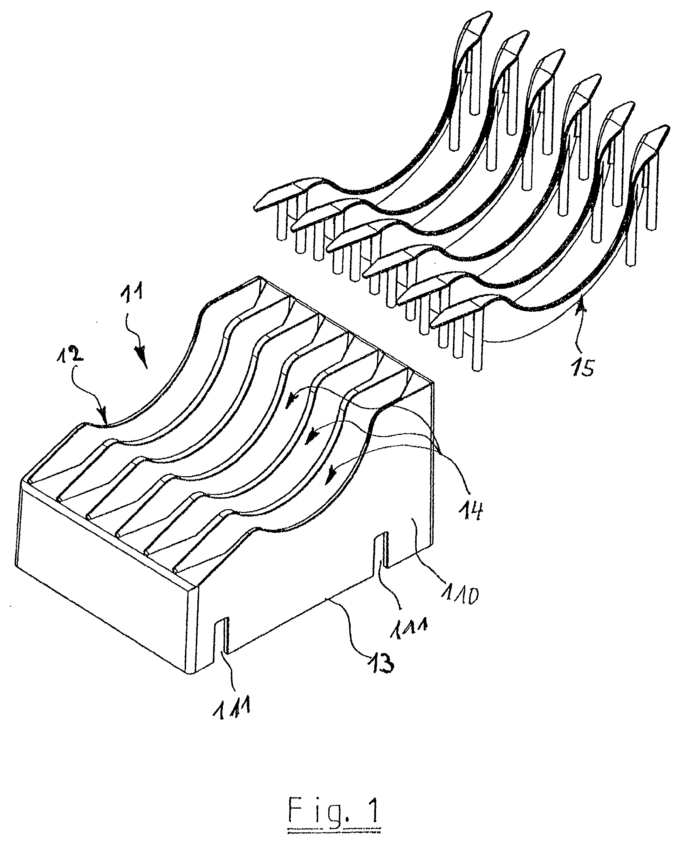

Die Figur 01 zeigt in der Perspektive eine Vorrichtung 11 zur Aufbewahrung bzw. Vorhaltung von nicht näher dargestellten Tellern, die zum Einsatz in einem Campingfahrzeug, Caravan oder einem Boot bestimmt ist. Die Vorrichtung 11 besteht dabei aus einer Halterung 12 für die Teller. Die Halterung 12 zeichnet sich dadurch aus, dass die Halterung 12 aus einem einstückig gespritzten Kunststoffgestell 13 mit eingeformten Einsätzen 14 für die Teller besteht. Wie aus der Figur 01 weiter zu erkennen ist, können in die Einsätze 14 zusätzlich sogenannte Bodeneinsätze 15 eingesetzt werden, so dass auch Teller geringeren Durchmessers in dem Kunststoffgestell 13 vorgehalten werden können.

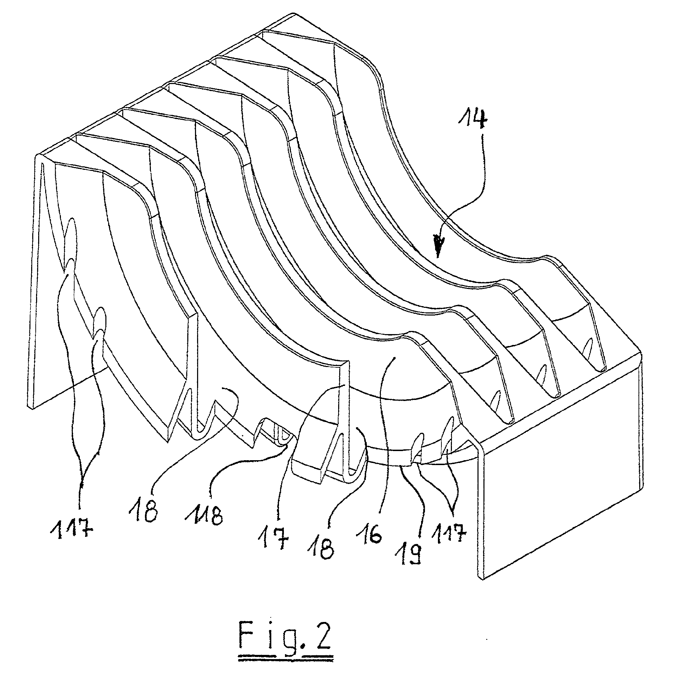

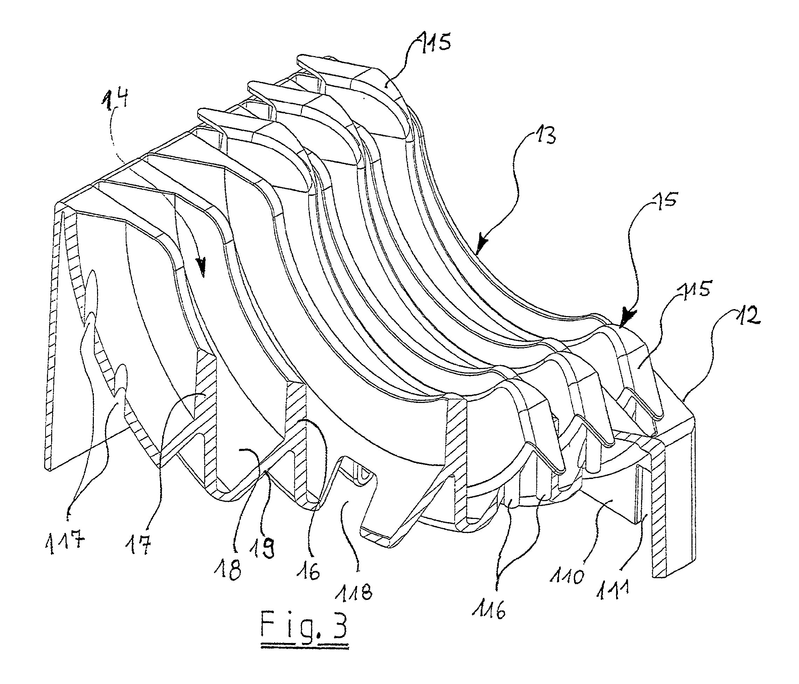

Wie aus den Figuren 02 und 03 näher zu erkennen ist, nehmen die Wände 16 und 17 des Einzeleinsatzes 14 viertelkreisförmige Bogensegmente ein, zwischen denen ein unter einer Schräge 18 verlaufender ebenfalls viertelkreisförmig gebogener Boden 19 eingeformt ist. Ist der Teller in eines der Einsätze 14 eingesetzt, so liegt der rückwärtige Tellerrand auf dem gebogenen Boden 19 an. Der Teller selbst wird somit in eine Zwangshalterung bzw. Zwangslage in dem Einsatz 14 vorgehalten, so dass durch das Eigengewicht des Tellers dieser sich selbsttätig ruckelfrei festsetzt.

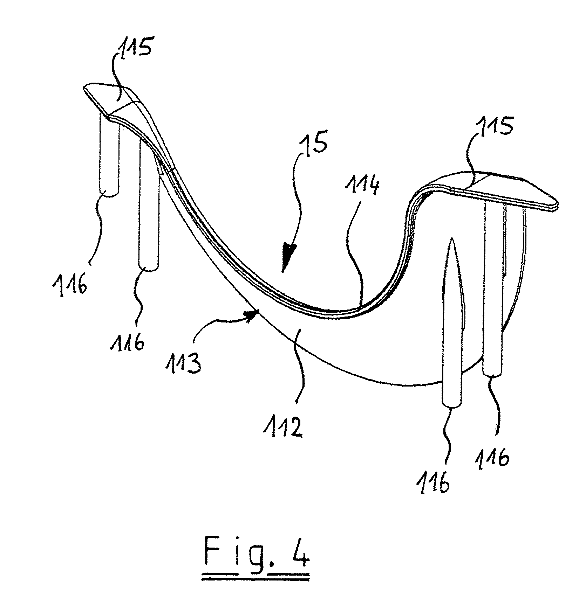

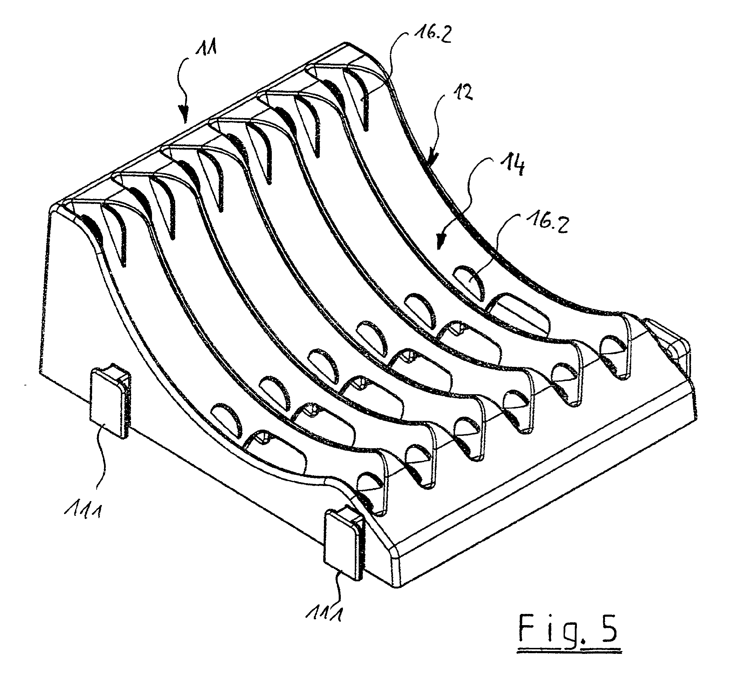

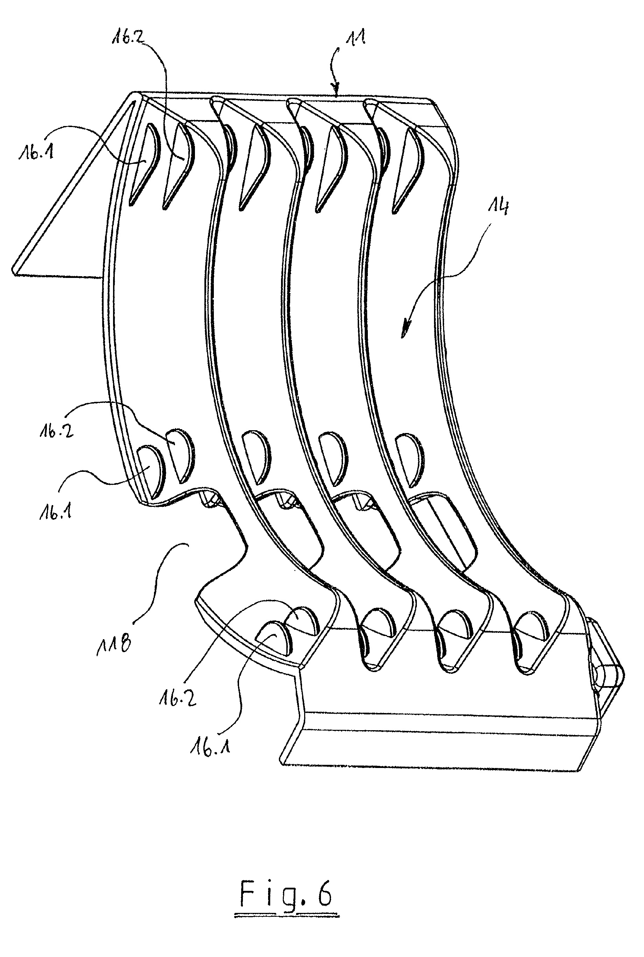

Nach einer zweckmäßigen Ausführungsform der Erfindung, dargestellt in der Figur 01, ist jeweils an einer der nach außen weisenden Seitenwand 110 des Gestells 13 jeweils ein Hakenelement - nicht näher dargestellt - bzw. eine Ausnehmung 111 angeformt bzw. eingeformt, um die einzelnen Gestelle 13 miteinander zu verbinden. In Weiterbildung der Erfindung, wie in der Figur 01 aber auch in der Figur 03 dargestellt, ist zur Verringerung des Aufnahmeraumes des Einzeleinsatzes 14 ein zusätzlicher Bodeneinsatz 15 in den Einzeleinsatz 14 einsetzbar. Somit wird ermöglicht, dass insbesondere auch Teller geringeren Durchmessers in dem Gestell 13 vorgehalten werden können. Hierzu weist der zusätzliche Bodeneinsatz 15 ebenfalls einen unter einer Schräge 112 verlaufenden viertelkreisförmigen Bogen 113 auf, der mit einem geringeren Durchmesser ausgestattet ist. Wie insbesondere aus der Figur 04 zu erkennen ist, geht die obere Bogenwand 114 des zusätzlichen Bodeneinsatzes 15 jeweils endseitig in eine Kragenwulst 115 über, die im eingesetzten Zustand, wie beispielsweise in der Figur 03 dargestellt, auf der Wandung des Einsatzes 14 aufliegt. Mittels dieser Kragenwulst 115 ist es möglich, beispielsweise den zusätzlichen Bodeneinsatz 15 einmal in den Einsatz 14 einzustecken bzw. ihn auch über die Kragenwulst 15 aus dem Einsatz 14 herauszunehmen. Damit der zusätzliche Bodeneinsatz 15 stabil in dem Einsatz 14 gehaltert ist, sind an der Rückseite des zusätzlichen Bodeneinsatzes 15 Stifte 116 angeformt, die in Öffnungen 117 des Bodens 19 des Einsatzes 14 greifen. In Weiterbildung der Erfindung sind im Bereich des Bodens 19 des Einsatzes 14 sowie des zusätzlichen Bodeneinsatzes 15 Wasserabtropföffnungen 118 vorgesehen. Dabei können gemäß der Ausführungsform der Figuren 5 und 6 statt des Bodeneinsatzes 15 zur Aufnahme der Teller auch an der Wand 16 des Einzeleinsatzes 14 Stützelemente 16.1 und 16.2 für unterschiedliche Tellergrößen angeformt sein. Es versteht sich von selbst, dass auf den Stützelementen 16.1 der größere Teller und auf den Stützelementen 16.2 der kleinere Teller aufliegt.

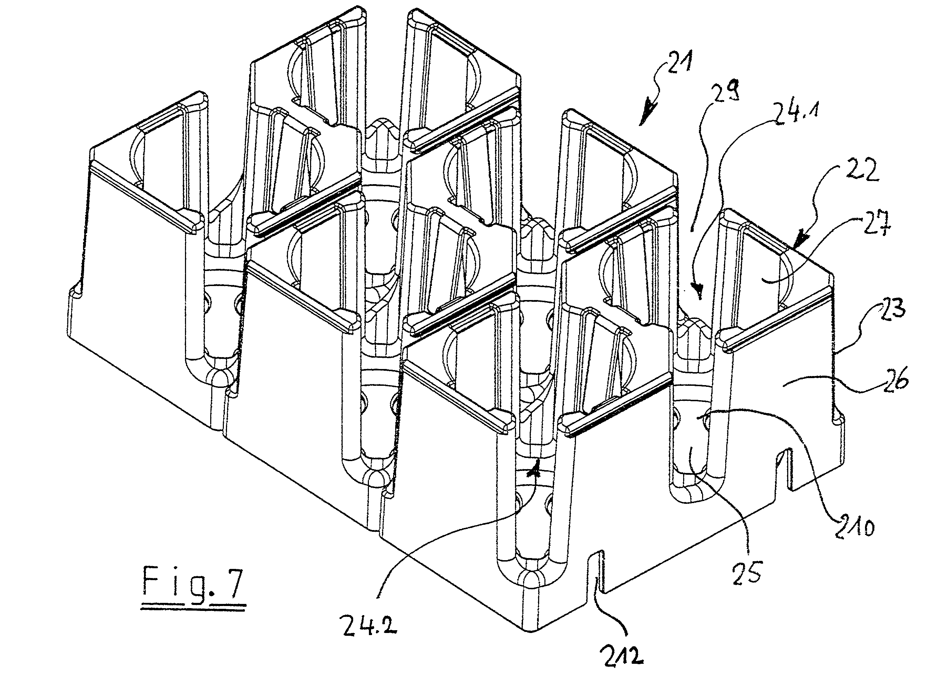

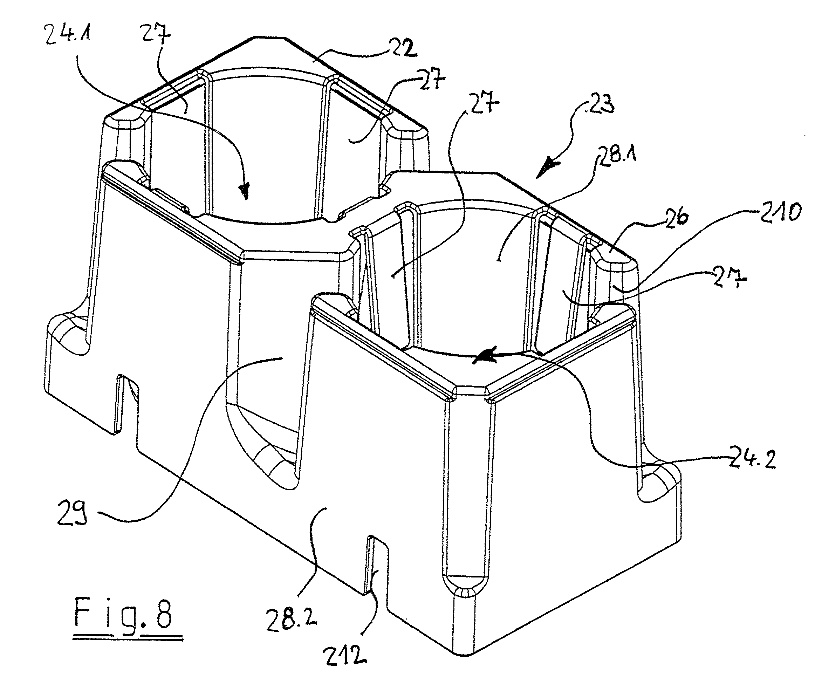

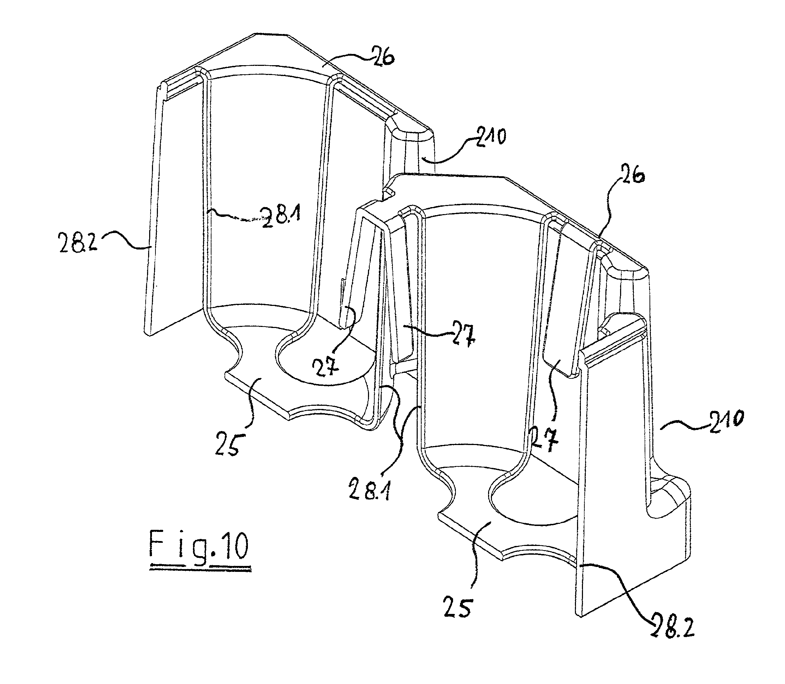

Die Figur 07 zeigt drei miteinander verbundene Vorrichtungen 21 zur Aufbewahrung bzw. Vorhaltung von nicht näher dargestellten Tassen, die in einem Campingfahrzeug, Caravan oder einem Boot in den darin vorgesehenen Möbeln untergebracht werden können. Die Einzelvorrichtung 21, gezeigt in den Figuren 8, 9 und 10, besteht dabei ebenfalls aus einer Halterung 22, die aus einem einstückig gespritzten Kunststoffgestell 23 geformt ist, wobei jedes Kunststoffgestell 23 mit zwei geformten Einsätzen 24.1 und 24.2 für die Tassen ausgestattet ist.

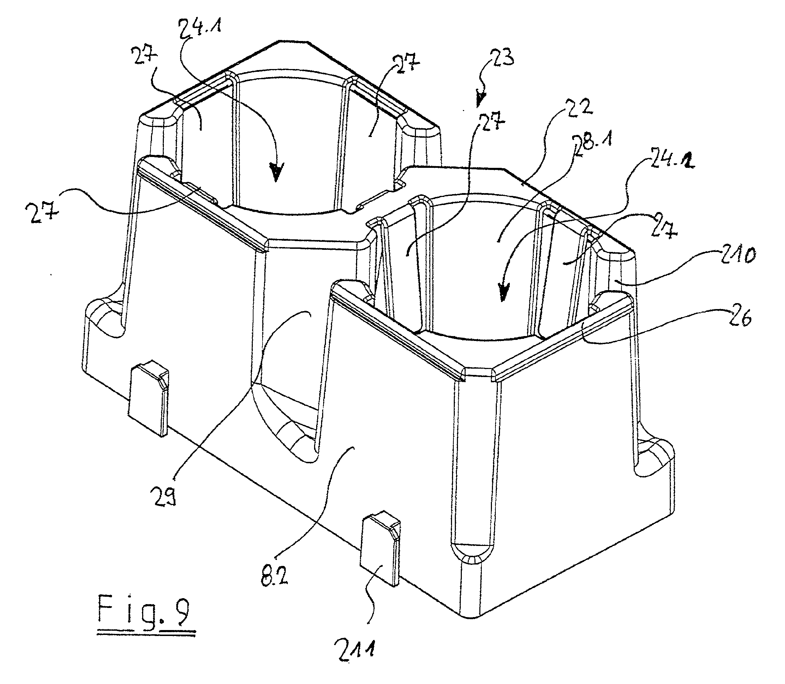

Wie insbesondere aus der Figur 07, in der teilweise geschnittenen Darstellung zu erkennen ist, weist der Einsatz 24.1 und 24.2 einen Boden 25 auf, an die die Tasse einfassenden Wände 26 angeformt sind. Wie aus der perspektivischen Draufsicht zu erkennen ist, nehmen die einfassenden Wände 26 im wesentlichen eine Rechteckstruktur ein. Aus den Figuren 08 und 09 ist zu erkennen, dass in den Wänden 26 Federzungen 27 eingeformt oder eingelassen sind, die eine Verspannung der Tasse in dem Einsatz 24.1 bzw. 24.2 bewirken. Dabei sind die Wände 26 doppelwandig ausgebildet, wobei in der nach innen weisenden Wand 28.1 die Federzunge 27 aus dem Material der Innenwand ausgespart ist. Dies ist deutlich in den Figuren 08, 09 und 10 zu erkennen.

Um die einzelnen Kunststoffgestelle 13 sowie 23 platzsparend aneinander zu fügen, ist im Wandbereich eine Ausnehmung 29 zur Aufnahme eines Tassengriffs vorgesehen. Dabei sind jeweils Ausnehmungen 29 und 210 diametral auf einer Diagonalen des Einsatzes 24.1, 24.2 angeordnet. Somit können, wenn die einzelnen Gestelle 23 aneinandergefügt werden, die Tassen entsprechend ausgerichtet werden.

Um die einzelnen Gestelle 13 und 23 aneinander zu fügen, sind jeweils an einer der nach außen weisenden Wand 28.2 des Einsatzes 24 je ein Hakenelement 211, wie in der Figur 09 dargestellt, bzw. eine Ausnehmung 212, dargestellt in der Figur 08, eingeformt, wobei das Hakenelement 211 jeweils gegenüberliegend zu der Ausnehmung 212 angeordnet ist. Somit lässt sich erreichen, dass die Kunststoffgestelle 23 wie in der Figur 07 in der Perspektive dargestellt ist, aneinandergereiht werden können, wobei auf Grund der Hakenelemente 211 und der Ausnehmungen 212 diese fest miteinander verbunden sind.

## Patentansprüche

1. Vorrichtung zur Aufbewahrung bzw. Vorhaltung von Geschirr wie Teller oder Tassen in einem Campingfahrzeug, einem Caravan oder einem Boot, bestehend aus einer Halterung für die Teller oder Tassen, **dadurch gekennzeichnet, dass** die Halterung (12, 22) aus einem einstückig gespritzten Kunststoffgestell (13, 23) mit geformten Einsätzen (14, 24) für die Teller oder Tassen besteht, wobei an einer der nach außen weisenden Seitenwand (110, 210) des Gestells (13, 23) jeweils ein Hakenelement bzw. eine Ausnehmung (111, 211) angeformt bzw. eingeformt ist, um die einzelnen Gestelle (13) und (23) miteinander zu verbinden.

2. Vorrichtung nach Anspruch 1, **dadurch gekennzeichnet, dass** die Halterung (12) für die Teller Wände (16) und (17) des Einzeleinsatzes (14) viertelkreisförmige Bogensegmente einnehmen, zwischen denen ein unter einer Schräge (18) verlaufender ebenfalls viertelkreisförmig gebogener Boden (19) eingeformt ist.

3. Vorrichtung nach Anspruch 2, **dadurch gekennzeichnet, dass** insbesondere an der Wand (16) des Einzeleinsatzes (14) Stützelemente (16.1) und (16.2) für unterschiedliche Tellergrößen angeformt sind.

4. Vorrichtung nach Anspruch 2, **dadurch gekennzeichnet, dass** für unterschiedliche Tellergrößen zur Verringerung des Aufnahmeraumes des Einzeleinsatzes (14) ein zusätzlicher Bodeneinsatz (15) in den Einzeleinsatz (14) einsetzbar ist.

5. Vorrichtung nach Anspruch 3, **dadurch gekennzeichnet, dass** der zusätzliche Bodeneinsatz (15) ebenfalls einen unter einer Schräge (112) verlaufenden viertelkreisförmig gebogenen Bogen (113) mit geringerem Durchmesser aufweist.

6. Vorrichtung nach Anspruch 1, **dadurch gekennzeichnet, dass** der Einsatz (24) für die Tassen einen Boden (25) aufweist, an dem die die Tasse einfassenden Wände (26) angeformt sind.

7. Vorrichtung nach Anspruch 6, **dadurch gekennzeichnet, dass** die einfassenden Wände (26) im wesentlichen eine Rechteckstruktur einnehmen.

8. Vorrichtung nach Anspruch 7, **dadurch gekennzeichnet, dass** in einer der Wände (26) mindestens eine Federzunge (27) eingeformt oder eingelassen ist, die eine Verspannung der Tasse in dem Einsatz (24.1) bzw. (24.2) bewirkt.

9. Vorrichtung nach Anspruch 8, **dadurch gekennzeichnet, dass** die Wände (26) doppelwandig ausgebildet sind, wobei in der nach innen weisenden Wand (28.1) die Federzunge aus dem Material der Wand (26) ausgespart ist.

10. Vorrichtung nach einem oder mehreren der vorhergehenden Ansprüche 1 bis 9, **dadurch gekennzeichnet, dass** im Bereich des Bodens (19, 29) des Einsatzes (14, 24) sowie des zusätzlichen Bodeneinsatzes (25) Wasserabtropföffnungen (18) vorgesehen sind.
